# EUROPEAN PATENT SPECIFICATION

(11) **EP 2 463 447 B1**
(45) Date of publication and mention of the grant of the patent: **31.03.2021**
(21) Application number: 11181044.6
(22) Date of filing: 13.09.2011
(51) Int. Cl.: E03D 1/32, F16K 21/18

(54) **fill controller**
Füllsteuerung
Contrôle de remplissage

(30) Priority: 10.12.2010 GB 201020976
(43) Date of publication of application: 13.06.2012
(73) Proprietor: MERCANTILE VENTURES LIMITED, Preston, Lancashire PR1 3HP (GB)
(72) Inventor: HANSON, Allan, Liverpool, Merseyside L36 8B9 (GB); ILLINGWORTH, Paul, Maghull, Liverpool, Merseyside L31 2HT (GB)
(74) Representative: WP Thompson

(56) References cited:
- FR-A1- 2 584 795
- FR-A3- 2 921 944
- US-A- 2 591 975
- US-A- 4 945 944
- US-A1- 2003 079 780

## Description

This invention relates to fill controllers, in particular, but without limitation to fill controllers, such as inlet valves suitable for use in toilet cisterns.

Many toilets, especially European type toilets operate using the siphon effect to empty the contents of the toilet pan. To start the siphon effect, a relatively large amount of water needs to be introduced into the pan in a short period of time, However, the flow rates of mains water supplies are rarely sufficient to achieve this end, and so a cistern is therefore used to accumulate/store an amount of water ready to be used each time the toilet is flushed.

A cistern typically comprises a reservoir for containing a specified volume of water which can be automatically filled via a connection to a mains water supply, and an outlet arrangement (e.g. a flap valve or siphon) that enables the contents of the cistern to be emptied quickly.

The connection of the cistern to the mains water supply is usually effected using an inlet valve, which opens and closes automatically in response to the level of water within the cistern. In many cases, the inlet valve is actuated using a float, which floats on the water in the cistern: as the water level rises, the valve is progressively closed such that when the water level reaches a particular level, the valve is completely closed, thereby shutting-off the flow of water from the mains supply to the cistern and thus completing the filling of the cistern.

Due to the variety of styles of toilets, cisterns and mains water configurations that are possible, there needs to be a correspondingly varied range of inlet valves to accommodate these variations. When a toilet is first sold, this is not necessarily a problem as all components needed are sold together in a kit that an installer can use. However, this is not the case when a toilet needs to be subsequently repaired or where components thereof need to be replaced.

Such variations create problems for repair engineers, who need to stock and carry a range of inlet valves when attending a repair job. Whilst the number of different types of inlet valves that are needed can be reduced due to standardisation within the industry or by using adaptor kits that, for example, enable pipe diameters and connectors to be interchanged, there are, nevertheless, two types of inlet valves that are not interchangeable: so-called "bottom fill" and "side fill" inlet valves,

A "bottom fill" inlet valve is one that is adapted to be fitted to the base wall of the cistern with the mains inlet pipe coming up from below the cistern, whereas a "side fill" inlet valve is adapted to be fitted to a side wall of the cistern with the mains water pipe coming in from the side/rear of the cistern. Examples for devices comprising either a bottom fill inlet valve or a side fill inlet vale are shown in the document US 4,945,944, which document also discloses the features of the preamble of claim 1. Owing to the vastly different geometries of a "side fill" and "bottom fill" inlet valve, they are not interchangeable and so a repair engineer must carry both types in his/her inventory. This is disadvantageous because it can lead to having excess stock and because the "bulk buying" price of the valves is increased due to smaller quantities of each type being needed. For large firms of installers, contract repairers and stockists of parts, this problem can be considerable.

As such, a need therefore arises for an inlet valve that is capable of being used in both "side fill" and "bottom fill" applications.

According to the invention, there is provided a fill controller as defined in claim 1.

As such, the invention may conveniently provide an inlet valve, suitable for use in a toilet cistern, which can be fitted to either side-fill or bottom-fill cisterns by selecting one of the inlet tubes to connect to the mains water supply and by sealingly closing-off the remaining inlet tubes which would, in use, be redundant.

Preferably the side inlet tube is located at or towards the top, in use, of the fill controller.

Preferably the bottom inlet tube is located at or towards the bottom, in use, of the fill controller.

A manifold may be provided so that each of the inlet tubes can be connected to the inlet of the valve.

In a preferred embodiment the valve comprises a valve inlet and a valve outlet, wherein the valve inlet is connected to an upper inlet tube and a lower inlet tube via a manifold, and wherein the valve outlet is connected to the outlet tube.

The valve preferably comprises a hollow body portion within which the valve and manifold may be located. Such a configuration may produce a neater inlet valve that is less susceptible to snagging and damage of the valve and/or manifold.

The outlet tube is formed by an open-ended lower portion of the hollow body portion, and the lower inlet tube is nested within the outlet tube. Such a configuration makes the inlet valve more compact.

The valve is preferably automatically actuatable, most preferably using a float. However, the valve may be actuated using any other suitable means, such as a water level sensor operatively connected to a solenoid-actuated flow control valve.

The valve may be a rotating stem valve, a rising stem plug valve or a pneumatically balanced diaphragm valve.

Each inlet tube is preferably selectively and sealingly closeable. This may be accomplished in a variety of ways, such as by a plug or a cap, which may or may not be removable, once installed. Additionally each inlet tube may be closed off by a frangible blanking plate, which blanking plate may be broken off by the installer, prior to installation, to open just one of the inlet tubes.

Where a plug or cap is used to close-off the inlet tubes, each tube, cap and/or plug may comprise complementary screw-threads or clip formations and a seal interposed between the plug/cap and tube for sealingly closing the inlet tube.

Preferred embodiments of the invention shall now be described, by way of example only, with reference to the accompanying drawings in which:
Figure 1 is a schematic, sectional side view of a fill valve according to the invention fitted to a filled side-fill cistern;
Figure 2 is a schematic, sectional side view of the fill valve of Figure 1 to an empty side-fill cistern;
Figure 3 is a schematic, sectional side view of the fill valve of Figure 1 fitted to a filled bottom-fill cistern;
Figure 4 is a schematic, sectional side view of the fill valve of Figure 3 fitted to an empty bottom-fill cistern;
Figure 5 is a perspective view of a fill valve in accordance with the invention in a side-fill configuration; and
Figure 6 is a perspective view of the fill valve of Figure 5, but in a bottom-fill configuration.

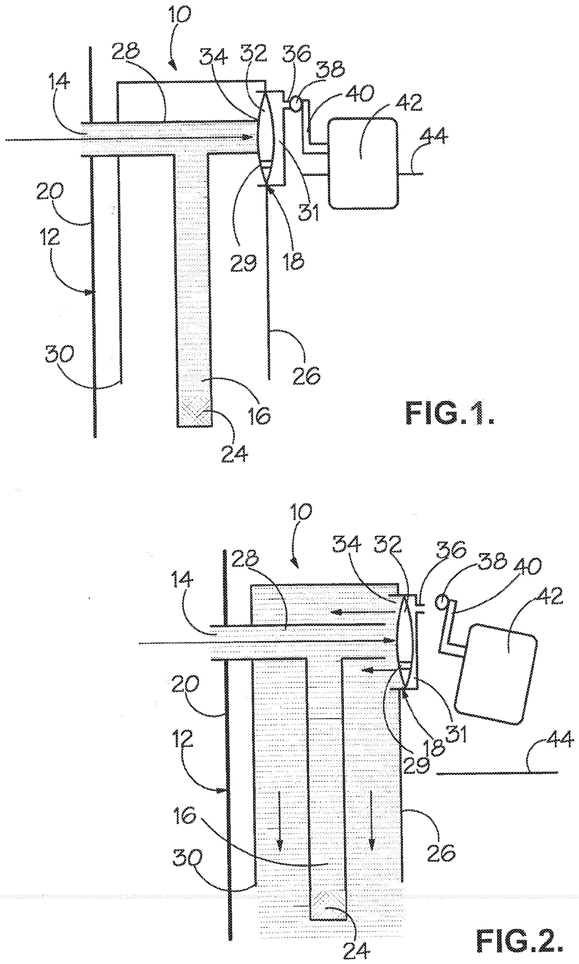

In Figures 1 to 4 of the drawings, a side and bottom fill inlet valve device 10 is used to control the flow of water into a toilet cistern 12. The inlet valve device 10 has a pair of inlet tubes 14, 16 and a valve 18 that controls the flow of water into the cistern 12. The device 10 is located within the cistern 12 and, in use, one of the inlet tubes 14, 16, is arranged so as to protrude through an opening in the sidewall 20 or base wall 22 of the cistern 12 so that it can be connected to an external mains water supply (not shown). The redundant inlet tube is closed-off using an end closure 24.

The device 10 comprises a hollow, open-bottomed, main body portion 26, which houses a manifold 28 and the water flow control valve 18. In the embodiment shown, the device 10 has upper inlet tube 14, which protrudes horizontally outwardly from an upper part of the main body portion 26, and lower inlet tube 16, which protrudes vertically downwardly beyond the lower peripheral edge 30 of the main body portion 26. Both inlet tubes 14, 16 communicate with the manifold 28, which in turn, communicates with the inlet of the flow control valve 18.

The flow control valve 18 comprises a diaphragm 32 which sealingly seats against the outlet end 34 of the manifold 28 and which is held in place by air pressure acting on its opposite side.

The valve can be opened by releasing the air pressure on the rear of the diaphragm 32 via a vent nipple 36. The vent nipple 36 is sealingly closed by a pad 38 that bears against the nipple's open end 36. The pad 38 is moved into and out of engagement with the nipple 36 by a lever 40 which is connected to a float 42. The float 42 floats on the water within the cistern 12, such that when the water level 44 is low, the float 42 drops, thereby pivoting the lever 40 and hence the pad 38 away from the nipple 36, releasing the air pressure on the back of the diaphragm 32 and allowing water to flow.

The opposite is also true, i.e. when the water level 44 rises, the valve is automatically shut off.

As can be seen in Figures 1 and 2, when the cistern 12 is full, the valve 18 is shut off and water cannot flow into the cistern. However, when the cistern 12 is empty, e.g. after flushing, the water level 44 drops, thereby opening the valve 18 and allowing water to flow from the mains supply (not shown), via the upper inlet tube 14, through the manifold 28, past the diaphragm 32 of the valve 18, into the main hollow body portion of the 26 of the device 10 and out through the outlet 30 of the device 10.

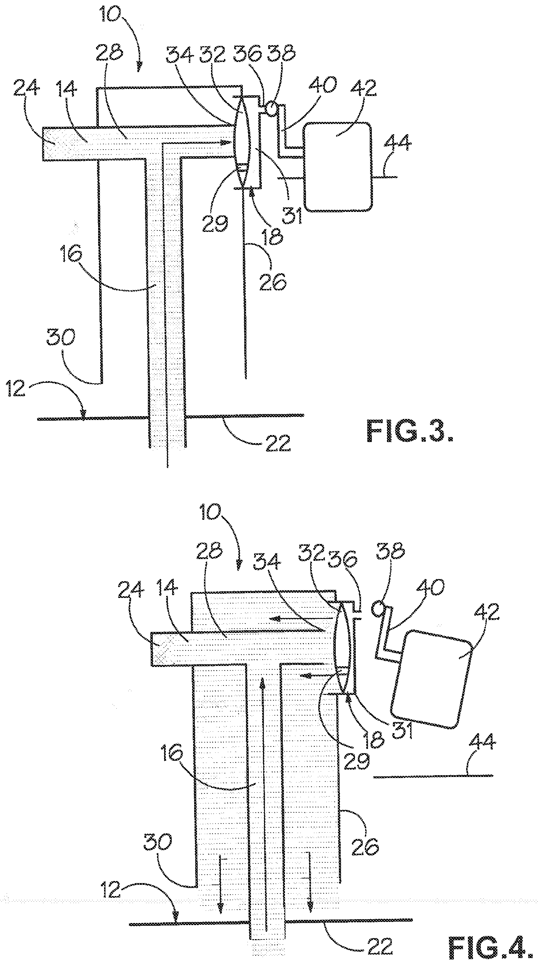

In Figures 1 and 2, the device is used in side-filling mode, with the end of the lower inlet tube 16 being blocked off by a cap 24. In Figures 3 and 4, in which the principle of operation is exactly the same, the device 10 is used in bottom-filling mode: the lower inlet tube 16 being connected to the mains water supply and the upper inlet tube 14 being blocked off by the cap 24.

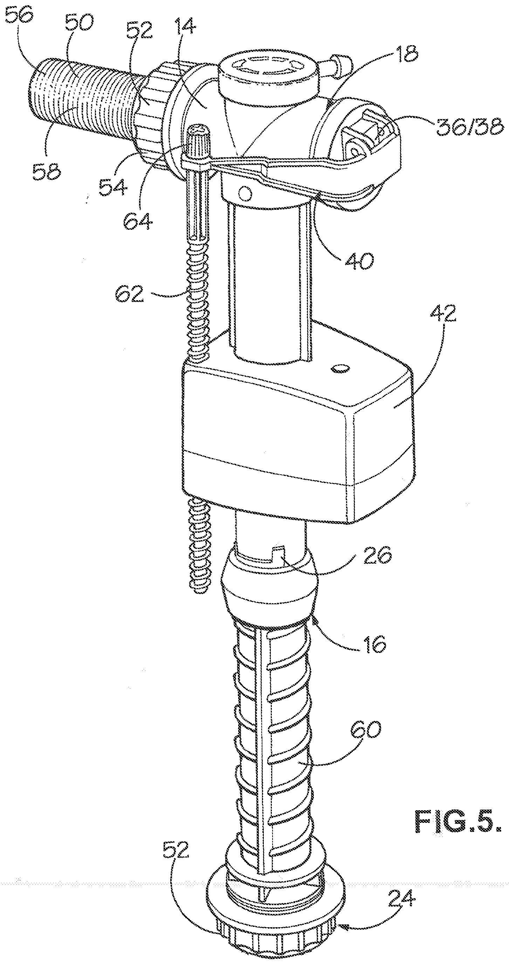

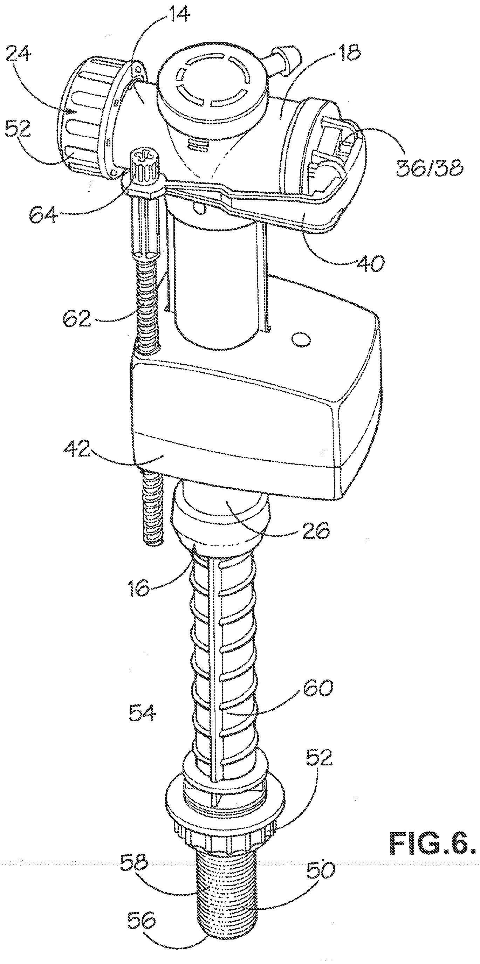

In Figures 5 and 6, the exterior of a side- an d bottom-fill inlet valve 10 according to the invention is shown. Identical reference signs have been used in Figures 5 and 6 to denote identical features to those described with reference to Figures 1 to 4.

As described above, the device 10 comprises a pair of inlet tubes 14, 16 and a valve 18 that controls the flow of water into a cistern (not shown). In Figure 5, the upper inlet tube 14 of the device 10 is fitted with an inlet spigot 50 that screws onto an external thread of the upper inlet tube 14.

The inlet spigot 50 has a collar portion 52 having an internal thread for engaging the external thread of the inlet tube 14 and a knurled outer surface 54 to enable a user to grip the collar 52. The inlet spigot 50 additionally comprises an elongate tube portion 56 having an external thread 58. In use, the elongate tube portion 56 passes through a through hole in the side wall 20 of the cistern 12 and its screw thread 58 is used to connect the inlet 14 to a mains water supply using screw-threaded connectors.

The redundant inlet tube 16 is closed-off using an end closure 24. The end closure 24 comprises an internally screw-threaded cap having a knurled outer surface 54.

The inlet spigot 50 and end closure 24 are interchangeable such that either the upper 14 or lower 16 inlet tubes can be active or redundant, as can be seen by comparing Figures 5 and 6.

The lower inlet tube 16 has a telescopically-extendable extension tube 60 whose outer surface seals against the inner surface of the lower inlet tube 16 using an O-ring seal (not shown). By extending or retracting the extension tube 60 relative to the lower inlet tube 16, the overall height of the device 10 can be adjusted to fit into a range of cisterns.

The device 10 comprises a hollow, open-bottomed, main body portion 26, a manifold 28 and a water flow control valve 18, as previously described.

The water flow control valve 18 can be opened by releasing the air pressure on the rear of the diaphragm via a vent nipple and pad arrangement 36, 38, which is actuated using a lever 40 which is connected to a float 42. The float 42 height relative to the device 10 can be adjusted by turning a stud 62 interposed between the float 42 and the lever 40 using a grip portion 64. By turning the grip portion 64, the fill level of the cistern can be readily adjusted.

Figure 6 shows the same fill device 10 as shown in Figure 5, except that the inlet spigot 50 and end closure 24 have been reversed so that the device 10 can be fitted to a bottom-filling cistern, rather than to a side-filling cistern.

The invention is not restricted by the details of the foregoing embodiments but only by the appended claims; for example, more than two inlet tubes may be provided, they may be provided at different locations, a different type of valve may be used,

## Claims

1. A fill controller (10) for a toilet cistern (12), the fill controller (10) comprising a hollow body portion (26) and an outlet and further comprising:
a side inlet tube (14), which protrudes outwardly from the hollow body portion (26);
a bottom inlet tube (16) nested within the outlet, which protrudes beyond a lower peripheral edge of the hollow body portion;
a valve (18) for controlling the flow of water between the inlet tubes (14, 16) and the outlet; and
means (24) for selectively and sealingly closing all but one of the inlet tubes (14, 16).

2. A fill controller as claimed in any preceding claim, further comprising a manifold (28) interposed between the inlet tubes (14, 16) and the valve (18).

3. A fill controller as claimed in claim 2 wherein the valve (18) and manifold (28) are located within the interior of the hollow body portion (26).

4. A fill controller as claimed in claim 3, wherein the outlet is formed as an open-ended lower portion of the hollow body portion (26).

5. A fill controller as claimed in any preceding claim, wherein the valve (18) is automatically actuatable.

6. A fill controller as claimed in claim 5, wherein the valve (18) is a float valve.

7. A fill controller as claimed in any preceding claim, wherein the valve (18) comprises any one or more of the group comprising: a rotating stem valve; a rising stem plug valve; a pneumatically balanced diaphragm valve; and a hydraulically balanced diaphragm valve.

8. A fill controller as claimed in any preceding claim, wherein the means (24) for selectively and sealingly closing all but one of the inlet tubes comprises a removable plug or a cap.

9. A fill controller as claimed in claim 8, wherein each inlet tube (14, 16) and each plug or cap (24) comprises complementary screw-threads or clip formations and a seal for sealingly closing the inlet tube.

10. A fill controller as claimed in any preceding claim, wherein each inlet tube is closed off by a blanking plate and wherein a selected one of the plurality of inlet tubes is able to be opened by removing the blanking plate.

11. A fill controller as claimed in claim 10, wherein the blanking plate is frangible.

## Patentansprüche

1. Füllsteuereinheit (10) für einen Toilettenspülkasten (12), wobei die Füllsteuereinheit (10) einen Hohlkörperabschnitt (26) und einen Auslass umfasst und ferner Folgendes umfasst:
eine Seiteneinlassröhre (14), die von dem Hohlkörperabschnitt (26) nach außen vorsteht;
eine nestartig in dem Auslass angeordnete Bodeneinlassröhre (16), die über einen unteren Umfangsrand des Hohlkörperabschnitts hinaus vorsteht;
ein Ventil (18) zum Steuern des Stroms von Wasser zwischen den Einlassröhren (14, 16) und dem Auslass; und
ein Mittel (24) zum selektiven und dichtenden Verschließen aller außer einer der Einlassröhren (14, 16).

2. Füllsteuereinheit nach einem der vorangehenden Ansprüche, ferner umfassend einen Verteiler (28), der zwischen den Einlassröhren (14, 16) und dem Ventil (18) angeordnet ist.

3. Füllsteuereinheit nach Anspruch 2, wobei sich das Ventil (18) und der Verteiler (28) im Inneren des Hohlkörperabschnitts (26) befinden.

4. Füllsteuereinheit nach Anspruch 3, wobei der Auslass als offenendiger unterer Abschnitt des Hohlkörperabschnitts (26) gebildet ist.

5. Füllsteuereinheit nach einem der vorangehenden Ansprüche, wobei das Ventil (18) automatisch betätigbar ist.

6. Füllsteuereinheit nach Anspruch 5, wobei es sich bei dem Ventil (18) um ein Schwimmerventil handelt.

7. Füllsteuereinheit nach einem der vorangehenden Ansprüche, wobei das Ventil (18) eines oder mehrere der Folgendes umfassenden Gruppe umfasst: ein Drehspindelventil; ein Hubstopfenventil; ein pneumatisch abgeglichenes Membranventil; und ein hydraulisch abgeglichenes Membranventil.

8. Füllsteuereinheit nach einem der vorangehenden Ansprüche, wobei das Mittel (24) zum selektiven und dichtenden Verschließen aller außer einer der Einlassröhren einen entfernbaren Stopfen oder eine Kappe umfasst.

9. Füllsteuereinheit nach Anspruch 8, wobei jede Einlassröhre (14, 16) und jeder Stopfen oder jede Kappe (24) komplementäre Schraubengewinde oder Klemmengebilde und eine Dichtung zum dichtenden Verschließen der Einlassröhre umfasst.

10. Füllsteuereinheit nach einem der vorangehenden Ansprüche, wobei jede Einlassröhre durch eine Abdeckplatte abgesperrt ist und wobei eine ausgewählte der Vielzahl von Einlassröhren durch Entfernen der Abdeckplatte geöffnet werden kann.

11. Füllsteuereinheit nach Anspruch 10, wobei die Abdeckplatte zerbrechlich ist.

## Revendications

1. Dispositif de commande de remplissage (10) pour un réservoir de chasse d'eau de toilettes (12), le dispositif de commande de remplissage (10) comportant une partie formant corps creux (26) et une sortie et comportant par ailleurs :
un tube d'entrée côté latéral (14), qui fait saillie vers l'extérieur depuis la partie formant corps creux (26) ;
un tube d'entrée côté fond (16) emboîté à l'intérieur de la sortie, qui fait saillie au-delà d'un bord périphérique inférieur de la partie formant corps creux ;
un robinet (18) servant à commander l'écoulement de l'eau entre les tubes d'entrée (14, 16) et la sortie ; et
un moyen (24) servant à fermer de manière sélective et de manière étanche tous sauf l'un des tubes d'entrée (14, 16).

2. Dispositif de commande de remplissage selon l'une quelconque des revendications précédentes, comportant par ailleurs un collecteur (28) intercalé entre les tubes d'entrée (14, 16) et le robinet (18).

3. Dispositif de commande de remplissage selon la revendication 2, dans lequel le robinet (18) et le collecteur (28) sont situés à l'intérieur de la partie intérieure de la partie formant corps creux (26).

4. Dispositif de commande de remplissage selon la revendication 3, dans lequel la sortie est formée sous la forme d'une partie inférieure à extrémité ouverte de la partie formant corps creux (26).

5. Dispositif de commande de remplissage selon l'une quelconque des revendications précédentes, dans lequel le robinet (18) est automatiquement actionnable.

6. Dispositif de commande de remplissage selon la revendication 5, dans lequel le robinet (18) est un robinet à flotteur.

7. Dispositif de commande de remplissage selon l'une quelconque des revendications précédentes, dans lequel le robinet (18) comporte l'un quelconque ou plusieurs dans le groupe comportant : un robinet à tige tournante ; un robinet à tournant à tige montante ; un robinet à membrane pneumatiquement équilibré ; et un robinet à membrane hydrauliquement équilibré.

8. Dispositif de commande de remplissage selon l'une quelconque des revendications précédentes, dans lequel le moyen (24) servant à fermer de manière sélective et de manière étanche tous sauf l'un des tubes d'entrée comporte un bouchon amovible ou un chapeau.

9. Dispositif de commande de remplissage selon la revendication 8, dans lequel chaque tube d'entrée (14, 16) et chaque bouchon ou chapeau (24) comporte des filetages de vis ou formations d'encliquetage complémentaires et un joint d'étanchéité pour fermer de manière étanche le tube d'entrée.

10. Dispositif de commande de remplissage selon l'une quelconque des revendications précédentes, dans lequel chaque tube d'entrée est obturé par une plaque d'obturation et dans lequel un tube d'entrée sélectionné parmi la pluralité de tubes d'entrée est en mesure d'être ouvert par le retrait de la plaque d'obturation.

11. Dispositif de commande de remplissage selon la revendication 10, dans lequel la plaque d'obturation est cassable.
